Europäisches Patentamt

European Patent Office

Office européen des brevets

(19)

(11) **EP 1 409 421 B1**

(12) **EUROPÄISCHE PATENTSCHRIFT**

(45) Veröffentlichungstag und Bekanntmachung des Hinweises auf die Patenterteilung:
**16.03.2005 Patentblatt 2005/11**

(51) Int Cl.⁷: **C03B 29/00**, C03B 15/00, C03B 25/06, C03B 25/02

(21) Anmeldenummer: **01965158.7**

(22) Anmeldetag: **01.08.2001**

(86) Internationale Anmeldenummer:
**PCT/EP2001/008887**

(87) Internationale Veröffentlichungsnummer:
**WO 2002/024589 (28.03.2002 Gazette 2002/12)**

(54) **VORRICHTUNG UND VERFAHREN ZUM ENTSPANNEN VON GLÄSERN, INSBESONDERE VON FERNSEHTRICHTER-HALSANSÄTZEN**

DEVICE AND METHOD FOR RELAXING STRESS IN GLASS, ESPECIALLY AT THE BASE OF THE NECK OF A TELEVISION FUNNEL

DISPOSITIF ET PROCEDE POUR ASSURER LA RELAXATION DE CONTRAINTES DANS DU VERRE, NOTAMMENT AU NIVEAU DE L'EMBASE DU COL D'UN CONE DE TELEVISEUR

(84) Benannte Vertragsstaaten:
**DE**

(30) Priorität: **22.09.2000 DE 10060988**

(43) Veröffentlichungstag der Anmeldung:
**21.04.2004 Patentblatt 2004/17**

(73) Patentinhaber: **SCHOTT AG**
**55122 Mainz (DE)**

(72) Erfinder:
• **FOTHERINGHAM, Ulrich**
  **65191 Wiesbaden (DE)**
• **ESEMANN, Hauke**
  **55286 Wörrstadt (DE)**
• **HOPPE, Bernd**
  **55218 Ingelheim (DE)**
• **HÖZEL, Eva**
  **55270 Ober-Olm (DE)**
• **KLUGE, Michael**
  **63071 Offenbach (DE)**
• **BAUMBACH, Norbert**
  **67295 Bolanden (DE)**

(74) Vertreter: **Dr. Weitzel & Partner**
**Friedenstrasse 10**
**89522 Heidenheim (DE)**

(56) Entgegenhaltungen:
| | |
|---|---|
| EP-A- 0 112 224 | EP-A- 0 376 509 |
| EP-A- 0 761 614 | WO-A-00/01628 |
| WO-A-98/57899 | DE-A- 19 938 808 |
| DE-U- 29 905 385 | FR-A- 802 598 |
| FR-A- 2 386 492 | FR-A- 2 505 472 |
| FR-A- 2 606 866 | GB-A- 729 072 |
| GB-A- 2 320 021 | US-A- 1 953 023 |
| US-A- 3 120 433 | US-A- 4 983 202 |

EP 1 409 421 B1

**Beschreibung**

Die Erfindung betrifft ein Verfahren zum Abbau von Spannungen in Gläsern, insbesondere von Fernsehtrichter-Halsansätzen sowie eine Vorrichtung zum Entspannen von Gläsern.

Das zur Entspannung von Gläsern übliche Vorgehen ist beispielsweise in Günther Nölle: "Technik der Glasherstellung", VEB Deutscher Verlag für Grundstoffindustrie, Leipzig 1977, S. 180 ff. beschrieben. Dieses Entspannungskühlen kann entweder unmittelbar nach der Formgebung vorgenommen werden oder an einem bereits abgekühlten, aber noch spannungsbehafteten Glas, das zu diesem Zweck noch einmal erwärmt wird. Die im nachfolgenden verwendeten Begriffe "obere Kühltemperatur" und "untere Kühltemperatur" sind bei G. Nölle: "Technik der Glasherstellung", VEB Deutscher Verlag für Grundstoffindustrie, S. 182 bis 183, insbesondere Bild 127 definiert.

Die Begriffe ergeben sich aus einer Kühlkurve für ein aus der Formgebung heraus abgekühltes Glas. So wird gemäß dieser Definition zunächst nach G. Nölle a.a.O. aus der Formgebung heraus mit einer ersten Kühlgeschwindigkeit $\upsilon_{K1}$ gekühlt bis zur oberen Kühltemperatur, im Kühlbereich wird mit einer zweiten Geschwindigkeit $\upsilon_{K2}$ und unter der unteren Kühltemperatur mit einer dritten Kühlgeschwindigkeit $\upsilon_{K3}$ gefahren. $\upsilon_{K1}$ ist beliebig und richtet sich nach den technischen Möglichkeiten, unter Umständen gibt es anderweitige Beschränkungen, aus der Spannungsbildung ergeben sich keine.

$\upsilon_{K2}$ berechnet man zu

$$\upsilon_{K2} = \frac{\sigma_{ak}}{\psi M s^2}$$

Darin bedeutet nun $\sigma_{ak}$ die in der Glasoberfläche zugelassene Kühlspannung. Im nachfolgendem Zahlbeispiel wird für ein Alkali-Erdalkali-Silikatglas die obere Kühltemperatur mit 550° C und die untere Kühltemperatur mit 500° C angenommen, mit folgenden Stoffwerten

E = $8 \cdot 10^4$ N mm$^{-2}$
μ = 0,22
ϱ = 2,4 g cm$^3$
$\lambda_{eff}$= 2,7 Wm$^{-1}$ K$^{-1}$ (im Kühlbereich)
λ = 0,9 Wm$^{-1}$ K$^{-1}$
c = 0,9 kJ kg$^{-1}$ K$^{-1}$
α = 10$^{-5}$ K$^{-1}$
Ψ = 1/3 (Formfaktor) errechnet sich der Kühlmodul des Glases nach

$$M = \frac{\alpha E c \varrho}{\lambda(1 - \mu)}$$

zu

$$M_K = 0,8 \cdot 10^{12} \text{ N s K}^{-1} \text{ m}^{-4}$$

im Kühlbereich und bei tiefen Temperaturen

$$M_0 = 2,4 \cdot 10^{12} \text{ N s K}^{-1} \text{m}^{-4}$$

Lassen wir eine Kühlspannung von $\sigma_{ak}$ = 1,5 N mm$^{-2}$ in der Glasoberfläche zu und betrachten wir eine Platte mit Dicke s = 6 mm, so folgt $\upsilon_{k2}$= 9,4 K min$^{-1}$.

Beim Überschreiten dieser Kühlgeschwindigkeit ist mit unzulässig großen Kühlspannungen zu rechnen. Bei einer Breite des Kühlbereiches von 50 K benötigt man für seine Durchquerung etwa 5,3 min. $\upsilon_{K3}$ kann größer gewählt werden, denn die Abkühlgeschwindigkeit außerhalb des Kühlbereichs ist für die Kühlspannungen ohne Belang. Man muß nur darauf achten, daß das Glas während der Abkühlung nicht infolge temporärer Spannungen zu Bruch geht. Die dafür zulässige Abkühlgeschwindigkeit kann ebenfalls berechnet werden. Es gilt:

$$\upsilon_{K3} = \upsilon_{K2} + \frac{\sigma_a}{\psi Ms^2}$$

wobei unter $\sigma_a$ die maximal zulässige temporäre Spannung zu verstehen ist. Bei Abkühlung ist sie eine Zugspannung. Man muß mit $\sigma_a$ also unter der Zugfestigkeit bleiben, z.B. $\sigma_a$ = 20 N mm$^{-2}$ setzen.

Bei einer Glasdicke von 6 mm kommt man auf $\upsilon_{K3} \approx$ 40 K min$^{-1}$, also auf eine Abkühlzeit von der unteren Kühltemperatur von etwa 12 min.

Beim Überschreiten dieser Abkühlgeschwindigkeit ist mit Kühlbruch zu rechnen.

Zum Entspannnen bereits abgekühlter Gläser werden diese zunächst wieder auf eine Haltetemperatur erwärmt, bei der die Spannungen beispielsweise instantan relaxieren.

Bei G, Nölle a.a.O. wird auch darauf hingewiesen, daß die Haltetemperatur auch niedriger, zwischen die obere und die unter Kühltemperatur, gelegt werden kann. Dann verlängert sich die für die Entspannung nötige Haltezeit. Nach den Gesetzen der Spannungsrelaxationskinetik gilt auch die Umkehrung: Bei einer höheren Haltetemperatur verkürzt sich die notwendige Haltezeit. Dieszbezüglich wird auf G. W. Scherer, "Relaxation in Glass and Composites", Wiley, 1986 verwiesen.

Durch die Wahl einer immer höheren Haltetemperatur kann die Haltezeit immer weiter verkürzt werden bis man von einer praktisch instantanen Spannungsrelaxation bei der dann erreichten Temperatur und allen höheren Temperaturen ausgehen kann. Auch dieses Verfahren ist bei G. Nölle beschrieben. Hierzu heizt man auf diese Temperatur und kühlt dann bis zum unteren Kühlpunkt mit der Kühlgeschwindigkeit, die sich nach dem bei G. Nölle angegebenem Verfahren für die Kühlgeschwindigkeit im Bereich oberhalb des unteren Kühlpunktes ergibt.

Nachteilig ist an diesem Verfahren, daß es auch schon bei der untersten Temperatur, bei der man von instantaner Spannungsrelaxation ausgehen kann, zu einer Formveränderung des vor dem Kühlprozeß geformten Glasproduktes kommen kann.

Außerdem ist das letztgenannte Verfahren auch vom Zeitverlauf her nicht optimal. Grund hierfür ist, daß sich die mit einer Erhöhung der Haltetemperatur verbundene, notwendige zusätzliche Kühlzeit linear zur Erhöhung der Haltetemperatur verhält, ohne daß sich die für eine Entspannung des Glases notwendige Haltezeit zwingend in demselben oder einem größeren Maße verkürzt. Die Haltezeit verläuft im wesentlichen exponentiell mit der Temperatur, ab gewissen Temperaturen ist sie so kurz, daß eine weitere Temperaturerhöhung einen kleineren Gewinn an Haltezeit bringt als die zusätzliche Kühlzeit beträgt.

Aufgabe der Erfindung ist es, ein verbessertes Verfahren zur Entspannung von Gläsern als die im Stand der Technik beschriebenen Verfahren anzugeben sowie eine Vorrichtung hierfür.

Ausgehend von der Temperatur, bei der die zur Entspannung notwendige Haltezeit gleich der zusätzlichen Kühlzeit ist, die bei einer Temperaturerhöhung auf die unterste Temperatur, bei der die Entspannung instantan abläuft, anfallen würde, kann eine Optimierung vorgenommen werden, bei der die Zielgröße die Summe aus der bei einer Anhebung der Temperatur auf einen höheren Wert anfallenden zusätzlichen Kühlzeit und der Haltezeit bei dieser höheren Temperatur ist. Man findet auf diese Art und Weise eine optimale Haltetemperatur. Die Kühlung wird dann wie folgt durchgeführt man erwärmt auf die Haltetemperatur, hält dort die Temperatur so lange konstant wie für die Entspannung nötigt ist und kühlt dann mit bekannten z.B. bei Nölle angegebenen Kühlgeschwindigkeiten ab. Im allgemeinen läßt sich so der bei der oberen Kühltemperatur zehn bis fünfzehn Minuten beanspruchende Entspannprozeß auf wenige (ca. 1 - 5) Minuten Gesamtdauer für die Entspannung und die zusätzlich notwendige Kühlung von der Haltetemperatur auf die obere Kühltemperatur reduzieren.

Ein derartiges Verfahren setzt voraus, daß die Haltetemperatur sehr schnell und sehr genau geregelt werden kann. Besonders bevorzugt ist es, wenn die Einregetzeit im Bereich von Sekunden liegt.

Erfindungsgemäß erfolgt die schnelle und genaue Einstellung der Temperatur mit Hilfe einer Prozeßsteuerung oder eines Regelkreises mit geringer Totzeit mit der Leistung einer aus Infrarotstrahlern bestehenden Heizanlage als Stellgröße, wobei die IR-Strahler IR-Strahler sind, die kurzwellige IR-Strahlung mit einer Farbtemperatur größer als 1.500° C, besonders bevorzugt größer als 2.000° C, besonders bevorzugt größer als 2.400° C, insbesondere größer 2.700° C emittieren.

Entscheidend für eine schnelle Ansteuerung bzw. Einregelung der gewünschten Temperaturen ist eine geringe thermische Totzeit des Systems. Vereinfachend kann man das System für die Ermittlung der Totzeit wie ein "RC-Glied" in der Elektrotechnik betrachten, wobei der Spannung im vorliegendem Fall die Temperaturen und den Strömen die Wärmestrome im vorliegendem Fall entsprechen.

Der Wärmewiderstand R ergibt sich als Quotient aus der Temperaturdifferenz zwischen den Heizelementen und dem Glühgut einerseits sowie dem fließenden Wärmestrom andererseits. Die Wärmekapazität C erhält man, wenn man den von den Heizelementen abgegebenen Wärmestrom durch die Heizrate des Glühgutes teilt. Im Idealfall, wenn der fließende Wärmestrom dem Glühgut allein zugutekommt und keine Erwärmung von Streukapazitäten stattfindet, ist die Wärmekapazität die des Glases bzw. des Glühgutes allein. Wenn Streukapazitäten mit erwärmt werden, werden diese so stark gewichtet, wie es dem Quotienten aus der eigenen Heizrate und der Heizrate des Glühgutes entspricht.

Den Wärmewiderstand R kann man niedrig gestalten, indem man als Heizelemente erfindungsgemäß Infrarotstrahler hoher Temperatur wählt. Nach dem Stefan-Boltzmann-Gesetz ist die Netto-Wärmestrahlungsstromdichte j zwischen zwei sich zustrahlenden ebenen Flächen gegeben durch

$$j = \sigma \cdot \varepsilon_1 \cdot \varepsilon_2 \cdot (T_1^4 - T_2^4)/(\varepsilon_1 + \varepsilon_2 - \varepsilon_1\varepsilon_2)$$

wobei $\sigma$ die Stefan-Boltzmann-Konstante ist, $\varepsilon_1$ bzw. $T_1$ die Emissivität bzw. die Temperatur der einen Fläche und $\varepsilon_2$ bzw. $T_2$ die Emissivität bzw. die Temperatur der anderen Fläche.

In einer ersten Näherung gilt

$$j = \sigma \cdot \varepsilon_1 \cdot \varepsilon_2 \cdot 4 \cdot ((T_1 + T_2)/2)^3 \cdot (T_1 - T_2)/(\varepsilon_1 + \varepsilon_2 - \varepsilon_1\varepsilon_2).$$

Die Wärmestrahlungsstromdichte ist in dieser Näherung proportional zur Temperaturdifferenz zwischen den beiden Flächen, wobei der Proportionalitätsfaktor nicht konstant ist, sondern seinerseits von der dritten Potenz der mittleren Temperatur $(T_1 + T_2)/2$ abhängt. Entsprechend der obigen Definition für den Wärmewiderstand R gilt für den gesamten Wärmestrom J (mit $J = j \cdot A$, wobei A die Größe der beiden Flächen ist) die Beziehung $J = (T_1 - T_2)/R$. Der Näherungsbeziehung für j liest man die Proportionalität $R \sim 1/((T_1 + T_2)/2)^3$ ab, d.h. der Wärmewiderstand R sinkt mit der dritten Potenz der mittleren Temperatur.

Aus der zuvor angestellten Betrachtung folgt, daß man den Wärmewiderstand und damit die Totzeit des Systems besonders niedrig halten kann, wenn man Heizelemente besonders hoher Temperatur wählt. Dies hat hohe mittlere Temperaturen und damit einen niedrigen Wärmewiderstand zur Folge. Besonders vorteilhaft ist daher die Verwendung kurzwelliger Infrarotstrahler, wie sie durch Wolframwendeln in einem dicht verschlossenen Quarzglasrohr mit einer Halogenverbindung als Schutzgas realisiert werden können, mit Temperaturen von bis ca. 3000° C. Um den Effekt, daß mit steigender Heiztemperatur die spektrale Verteilung der Wärmestrahlung hin zu kürzeren Wellenlängen wandert, wobei das Glühgut bei diesen kürzeren Wellenlängen weniger Strahlung absorbiert als bei längeren Wellenlängen, zu kompensieren, ist vorteilhafterweise vorgesehen, die IR-Bestrahlung in einem Strahlungshohlraum, in dem die infrarote Strahlung mehrmals unter verschiedenen Winkeln durch das Glas hin- und herreflektiert wird, durchzuführen. Betreffend die IR-Beheizung in einem Strahlungshohlraum wird auf die DE-U-299 05 385 verwiesen.

Eine Minimierung des Einflusses der Streukapazitäten kann man bewirken, indem man entweder die zu den Streukapazitäten gehörenden Wärmekapazitäten niedrig hält oder die Ankopplung der Streukapazitäten an die infrarote Strahlung möglichst weitgehend unterdrückt. Dies kann dadurch erreicht werden, daß die Emissivität der Ofenwände klein gehalten wird, d.h. diese stark reflektierend ausgebildet sind.

Vorzugsweise beträgt der Anteil der von den Wandflächen des IR-Strahlungshohlraumes reflektierten und/oder gestreuten Infrarot-Strahlung mehr als 50 % der auf diese Flächen auftreffenden Strahlung.

Besonders bevorzugt ist es, wenn der Anteil der von den Wandflächen reflektierten und/oder gestreuten infrarot-Strahlung mehr als 90 %, insbesondere mehr als 98 %, beträgt.

Ein besonderer Vorteil der Verwendung eines IR-Strahlungshohlraumes ist des weiteren, daß es sich bei Verwendung von sehr stark reflektierenden Wandmaterialien um einen Resonator hoher Güte Q handelt, der nur mit geringen Verlusten behaftet ist und daher eine hohe Energieausnutzung gewährleistet

Als die IR-Strahlung reflektierende Materialien können beispielsweise eine oder mehrere der nachfolgenden Materialien

$Al_2O_3$; $BaF_2$; $BaTiO_3$, $CaF_2$; $CaTiO_3$;
$MgO \cdot 3,5\ Al_2O_3$; $MgO$, $SrF_2$; $SiO_2$;
$SrTiO_3$; $TiO_2$; Spinell; Cordierit;
Cordierit-Sinterglaskeramik

eingesetzt werden.

Die Erfindung soll nachfolgend beispielhaft anhand der Figuren sowie der Ausführungsbeispiele beschrieben werden.

Es zeigen:

Figur 1     den prinzipiellen Aufbau einer Vorrichtung zum Entspannen von Glas gemäß der Erfindung mit Strahlungshohlraum.

Figur 2     die Remissionskurve über der Wellenlänge von $Al_2O_3$ Sintox Al der Morgan Matroc, Troisdorf, mit einem Remissionsgrad > 98 % im nahen IR-Wellenlängenbereich.

Figur 3     die Temperaturkurve zum Entspannen eines Femsehtrichterhalsansatzes nach dem Stand der Technik

Figur 4     die Temperaturkurve zum Entspannen eines Femsehtrichterhalsansatzes in einem IR-Strahlungshohlraum

Figur 5     die Temperaturkurve zum Entspannen eines Femsehtrichterhalsansatzes in einem IR-Strahlungshohlraum, bei dem der IRStrahlungshohlraum verschlossen ist

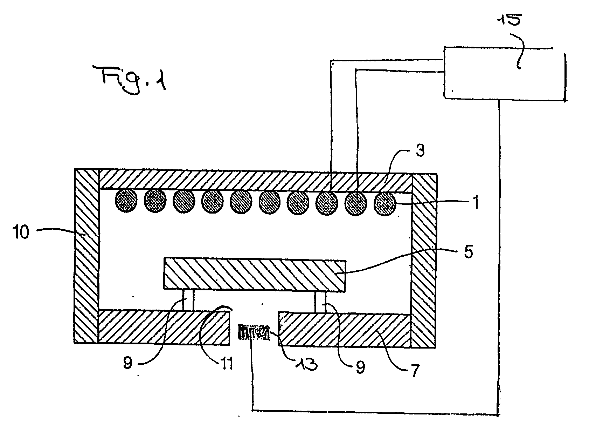

In Figur 1 ist eine Ausführungsform einer erfindungsgemäßen Vorrichtung mit einem IR-Stahlungshohlraum dargestellt mit der die Durchführung des erfindungsgemäßen Verfahrens möglich ist, ohne daß die Erfindung hierauf beschränkt wäre.

Die in Figur 1 dargestellte Heizvorrichtung umfaßt eine Vielzahl von IR-Strahlem 1, die unterhalb eines Reflektors 3 angeordnet sind. Durch den Reflektor 3 wird erreicht, daß das für die Entspannung zu erwärmende bzw. zu kühlende Glas 5, insbesondere der Fernsehtrichter-Helsansatz von der Oberseite erhitzt wird. Die von den IR-Strahlem abgegebene IR-Strahlung durchdringt das in diesem Wellenlängenbereich weitgehend transparente Glas 5 und trifft auf eine Trägerplatte 7 aus stark reflektierendem beziehungsweise stark streuendem Material. Besonders geeignet hierfür ist Quarzal, das auch im Infraroten ungefähr 90 % der auftreffenden Strahlung reflektiert. Alternativ hierzu könnte auch hochreines, gesintertes $Al_2O_3$ Verwendung finden, das einen Remissionsgrad von ungefähr 98 % bei hinreichender Dicke aufweist. Auf die Trägerplatte 7 wird das Glas 5 mit Hilfe von beispielsweise Quarzal- oder $Al_2O_3$-Streifen 9 aufgesetzt. Die Temperatur der Glasunterseite kann durch ein Loch 11 in der Trägerplatte mittels eines Pyrometers 13 gemessen werden. Die gemessene Temperatur wird an eine Steuer-/Regeleinheit 15 übermittelt. Die Steuer-/Regeleinheit 15 wiederum steuert die Heizanlage umfassend die IR-Strahler 1 an. Die IR-Strahler 1 sind bevorzugt kurzwellige IR-Strahler mit einer Farbtemperatur im Bereich 2000° C - 3000° C.

Die Wände 10 können zusammen mit Reflektor 3 und Trägerplatte 7 bei entsprechender Ausgestaltung mit reflektierendem Material, beispielsweise Quarzal oder $Al_2O_3$, einen IR-Strahlungshohlraum hoher Güte ausbilden.

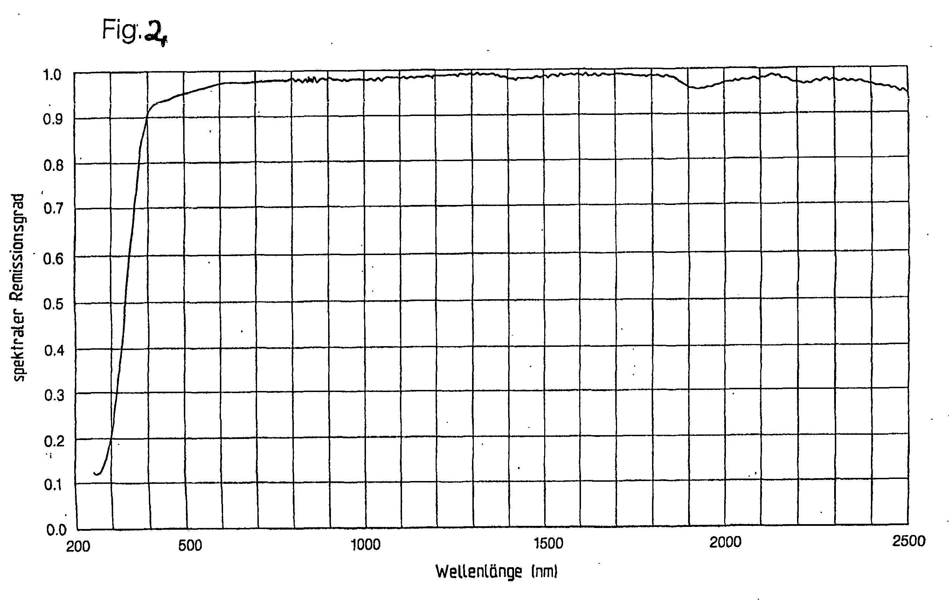

Die Remissisonskurve eines Wandmaterials, das eine hohe Reaktivität im IR-Bereich aufweist, beispielsweise $A_2O_3$ Sintox Al der Morgan Matroc, Troisdorf mit einem Remissionsgrad > 98 % im nahen IR-Wellenlängenbereich ist in Figur 2 gezeigt.

Nachfolgend soll das erfindungsgemäße Verfahren anhand von Ausführungsbeispielen näher erläutert werden.

Ausführungsbeispiel 1:

Der Fernsehtrichter 1 V wurde mit einem Prozeßzyklus mittels Elektromuffeln auf herkömmliche Art und Weise entspannt.

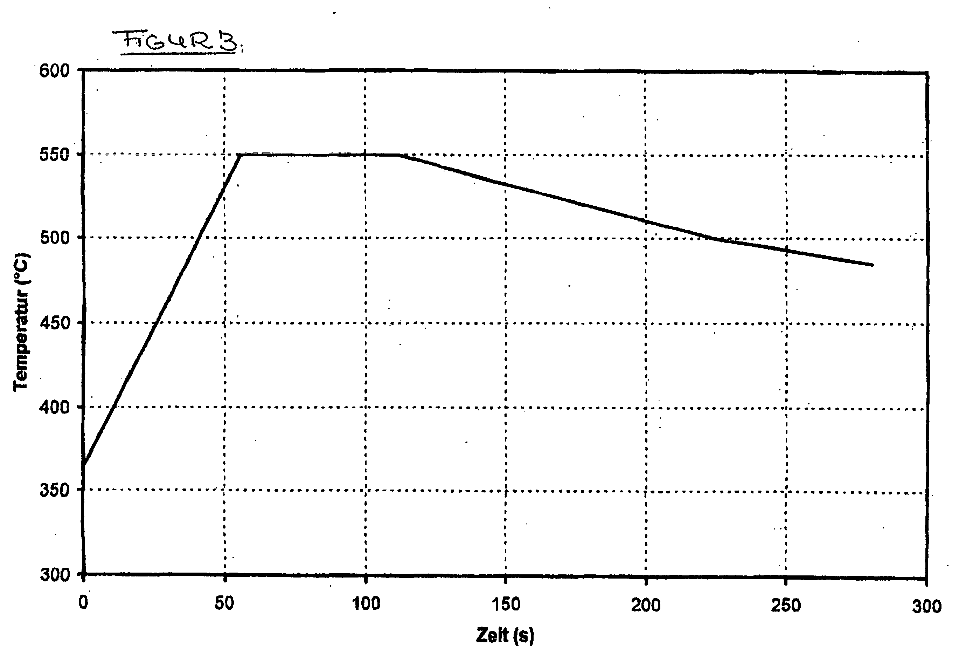

Das Entspannen ist in fünf Schritte unterteilt und der Temperaturverlauf in Figur 3 wiedergegeben.

Anfangstemperatur: 365° C

Schritt 1:     in 56 sec auf 550° C heizen
Schritt 2:     56 sec lang 550° C hatten
Schritt 3:     in 56 sec auf 525° C kühlen
Schritt 4:     in 56 sec auf 500° C kühlen
Schritt 5:     in 56 sec auf 485° C kühlen

Der Gesamtprozeß dauert 280 Sekunden.
Die erreichten Friedelwerte sind:

| Große Achse | Halsansatz | 15° F |
| --- | --- | --- |

(fortgesetzt)

| | Parabel | 29° F |
|---|---|---|
| Kleine Achse | Halsansatz | 21° F |
| | Parabel | 26° F |

Ausführungsbeispiel 2:

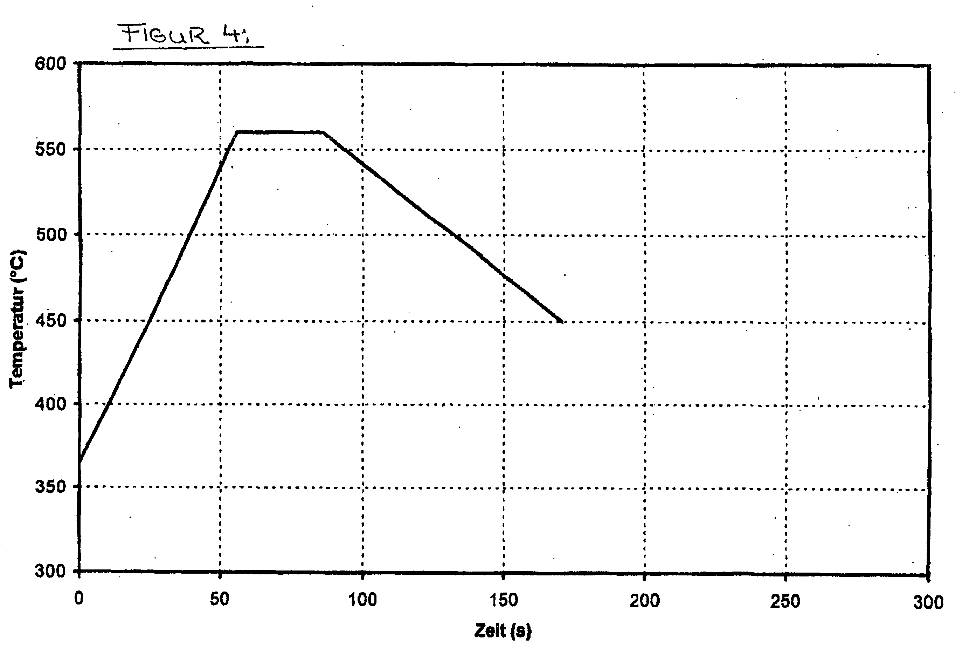

Der Fernsehtrichter 39 V wurde mit dem optimierten Prozeßzyklus und einer Heizanlage umfassend IR-Strahlungselemente mit einer geringen Totzeit entspannt.
Das Entspannen ist in drei Schritte unterteilt und der Temperaturverlauf in Figur 4 wiedergegeben.

Anfangstemperatur: 365° C

Schritt 1: in 56 sec auf 560° C heizen
Schritt 2: 30 sec lang 560° C halten
Schritt 3: in 85 sec auf 450° C kühlen

Der Gesamtprozeß dauert 171 Sekunden. Die Prozeßzeit ist um ca. 40 % gegenüber der Prozeßzeit des herkömmlichen Prozesses gemäß Ausführungsbeispiel 1 ohne IR-Strahler als Heizelemente verkürzt.
Die erreichten Friedelwerte sind:

| Große Achse | Halsansatz | 16° F |
|---|---|---|
| | Parabel | 13° F |
| Kleine Achse | Halsansatz | 20° F |
| | Parabel | 23° F |

Ausführungsbeispiel 3:

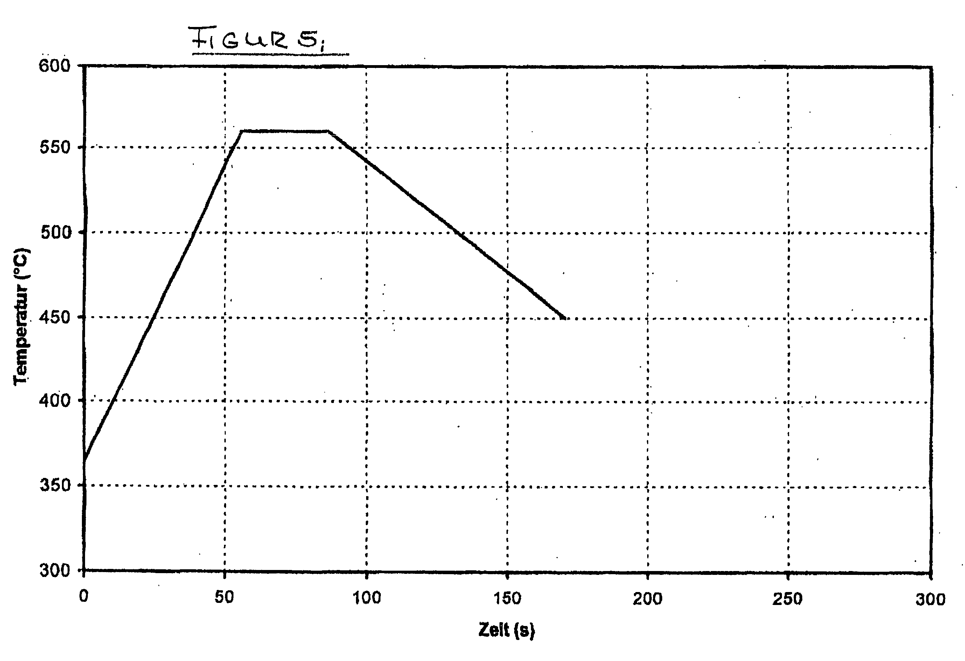

Der Fernsehtrichter 52 V wurde mit dem optimierten Prozeßzyklus und einer Heizanlage umfassend IR-Strahlungselemente mit einer geringen Totzeit entspannt. Zusätzlich wurde beim Aufheizen und Halten die obere Öffnung des IR-Ofens verschlossen. Diese Maßnahme verhinderte eine konvektive Strömung kühler Luft durch den Ofenraum entlang des Halses. Dadurch wurde eine bessere Temperaturhomogenität im Ofen erreicht. Beim Abkühlen wurde der Verschluß wieder entfernt, um eine ausreichende Abkühlrate zu gewährleisten.
Das Entspannen ist in drei Schritte unterteilt und der Temperaturverlauf in Figur 5 dargestellt.

Anfangstemperatur: 365° C

Schritt 1: in 56 sec auf 560° C heizen
Schritt 2: 30 sec lang 560° C halten
Schritt 3: in 85 sec auf 450° C kühlen

Der Gesamtprozeß dauert 171 Sekunden. Die Prozeßzeit ist um ca. 40 % gegenüber der Prozeßzeit des herkömmlichen Prozesses gemäß Ausführungsbeispiel 1 ohne IR-Strahler als Heizelement verkürzt.
Die erreichten Friedelwerte sind:

| Große Achse | Halsansatz | 07° F |
|---|---|---|
| | Parabel | 12° F |
| Kleine Achse | Halsansatz | 15° F |

(fortgesetzt)

| Parabel | 16° F |
| --- | --- |

Mit der Erfindung wird erstmals eine Vorrichtung und ein Verfahren angegeben, mit dem die Prozeßzeiten für das Entspannen von Gläsern deutlicht verkürzt werden konnten.

**Patentansprüche**

1.  Verfahren zum Entspannen von Gläsern, insbesondere Fernsehtrichter-Halsansätzen umfassend wenigstens die folgenden Schritte:

    1.1 das zu entspannende Glas wird von einer Anfangstemperatur $T_1$ auf eine Haltetemperatur $T_2$ aufgeheizt
    1.2 das Glas wird bei der Haltetemperatur $T_2$ für eine Zeitdauer $t_2$ gehalten, bis sich das Glas entspannt hat
    1.3 das Glas wird auf eine Temperatur $T_3$ abgekühlt
    1.4 das Hatten bei einer Temperatur $T_2$, das Aufheizen und das Abkühlen erfolgt mit Hilfe eines Regelkreises umfassend wenigstens einen Temperatursensor zur Sensierung der Temperatur und einer Heizanlage als Stellglied, **dadurch gekennzeichnet, dass**
    1.5 die Heizanlage IR-Strahler umfasst, die kurzwellige IR-Strahlung mit einer Farbtemperatur größer als 1500° C, besonders bevorzugt größer als 2000° C, besonders bevorzugt größer als 2400° C, insbesondere bevorzugt größer 2700° C emittieren,
    1.6 die Vorrichtung derart aufgebaut ist, dass die Regelung der Erwärmung oder Abkühlung des zu entspannenden Glases mit einer thermischen Totzeit von weniger als 10 s, insbesondere < 5 s erfolgt

2.  Verfahren nach Anspruch 1, **dadurch gekennzeichnet**, das stets $T_1 > T_3$ ist.

3.  Verfahren nach einem der Ansprüche 1 bis 2, **dadurch gekennzeichnet, daß**
    die IR-Strahler der Heizanlage in einem umgrenzten Raum umfassend reflektierende bzw. rückstreuende Begrenzungsflächen angeordnet sind.

4.  Verfahren nach Anspruch 3, **dadurch gekennzeichnet, dass**
    die reflektierenden bzw. rückstreuenden Begrenzungsflächen eines oder Mischungen mehrerer der nachfolgenden Materialien umfassen:
    $Al_2O_3$; $BaF_2$; $BaTiO_3$; $CaF_2$; $CaTiO_3$; $MgO \cdot 3,5\ Al_2O_3$; $MgO$; $SrF_2$; $SiO_2$; $SrTiO_3$; $TiO_2$; Quarzal; Spinell; Cordierit; Cordierit-Sinterglaskeramik.

5.  Verfahren nach einem der Ansprüche 3 oder 4, **dadurch gekennzeichnet, daß**
    der umgrenzte Raum ein IR-Strahlungshohlraum ist.

6.  Verfahren nach einem der Ansprüche 1 bis 5, **dadurch gekennzeichnet, daß**
    die Aufheizzeit geringer als 90 s, bevorzugt geringer als 60 s ist und die Temperatur $T_2$ geringer als 600° C ist.

7.  Verfahren nach einem der Ansprüche 1 bis 6, **dadurch gekennzeichnet, daß**
    die Haltezeit bei der Temperatur $T_2$ geringer als 60 s, bevorzugt geringer als 40 s ist.

8.  Verfahren nach einem der Ansprüche 1 bis 7, **dadurch gekennzeichnet. daß**
    die Abkühlzeit geringer als 120 s, bevorzugt geringer als 90 s ist und die Temperatur $T_3$ größer als 350° C, bevorzugt größer als 500° C ist.

9.  Vorrichtung zum Entspannen von Gläsern, insbesondere Fernsehtrichter-Halsansätzen umfassend wenigstens

    9.1 eine Heizanlage
    9.2 einen Temperatursensor
    9.3 eine Steuer-Regel-Einnchbung zum Ansteuern der Heizanlage in Abhängigkeit von der sensierten Temperatur und einem vorgegebenen Temperaturprogramm zum Entspannen von Gläsern,
    **dadurch gekennzeichnet, dass**

9.4 die Heizanlage IR-Strahler, die kurzwellige IR-Strahlung mit einer Farbtemperatur größer 1500° C, insbesondere größer 2000° C, besonders bevorzugt größer 2400° C, insbesondere bevorzugt größer 2700° C emittieren, umfasst, wobei die Vorrichtung derart aufgebaut ist, dass sie zur Regelung der Erwärmung oder Abkühlung des zu entspannenden Glases eine thermische Totzeit von weniger als 10 s, insbesondere weniger als 5 s aufweist.

10. Vorrichtung gemäß Anspruch 9, **dadurch gekennzeichnet, daß** die IR-Strahler der Heizanlage in einem umgrenzten Raum umfassend reflektierende bzw. rückstreuende Begrenzungsflächen angeordnet sind.

11. Vorrichtung gemäß Anspruch 10; **dadurch gekennzeichnet, daß** die reflektierenden bzw. rückstreuenden Begrenzungsflächen eines oder Mischungen aus mehreren der nachfolgenden Materialien umfassen: $Al_2O_3$; $BaF_2$; $BaTiO_3$; $CaF_2$; $CaTiO_3$; $MgO \cdot 3,5\ Al_2O_3$; MgO; $SrF_2$; $SiO_2$; $SrTiO_3$; $TiO_2$; Quarzal; Spinell; Cordierit; Cordierit-Sinterglaskeramik.

12. Vorrichtung gemäß einem der Ansprüche 10 oder 11, **dadurch gekennzeichnet, daß**
der umgrenzte Raum ein IR-Strahlungshohlraum ist.

13. Verwendung einer Vorrichtung
mit

13.1 einer Heizanlage, umfassend IR-Strahler, die kurzwellige IR-Strahlung mit einer Farbtemperatur größer als 1500° C, insbesondere größer als 2000° C, besonders bevorzugt größer 2400° C, insbesondere bevorzugt größer 2700° C emittieren sowie
13.2 einem Temperatursensor zu Sensierung der Temperatur und
13.3 einer Regeleinrichtung, wobei die sensierte Temperatur von der Regeleinrichtung eingelesen und die Heizanlage entsprechend der eingelesenen Temperatur mit einer thermischen Totzeit von weniger als 10 s, insbesondere weniger als 5 s, entsprechend einem vorgegebenen Temperaturprogramm angesteuert wird zum
13.4 Entspannen von Gläsern. insbesondere Fernsehtrichter-Halsansätzen.

14. Verwendung eines Verfahrens, bei dem

14.1 das Glas von einer Anfangstemperatur $T_1$ auf eine Haltetemperatur $T_2$ aufgeheizt wird,
14.2 das Glas bei der Haltetemperatur $T_2$ für eine Zeitdauer $t_2$ gehalten wird
14.3 das Glas auf eine Temperatur $T_3$ abgekühlt wird
14.4 wobei der Temperaturverlauf mittels einer Regeleinrichtung geregelt wird und die Regeleinrichtung eine
14.5 Heizanlage, die IR-Strahler. die kurzwellige IR-Strahlung mit einer Farbtemperatur großer als 1500° C, insbesondere größer als 2000° C, besonders bevorzugt großer 2400° C, insbesondere bevorzugt größer 2700° C emittieren, umfasst, mit einer thermischen Totzeit von weniger als 10 s, insbesondere weniger als 5 s ansteuert, zum
14.6 Entspannen von Gläsern, insbesondere Fernsehtrichter-Halsansätzen.

**Claims**

1. A method for relaxing glasses, especially the neck element of TV picture tubes, comprising at least the following steps:

1.1 the glass to be relaxed is heated from a starting temperature $T_1$ to a holding temperature $T_2$;
1.2 the glass is held at the holding temperature $T_2$ for a period $t_2$ until the glass
has relaxed;
1.3 the glass is cooled to a temperature $T_3$;
1.4 the holding at a temperature $T_2$, the heating and the cooling is carried out with the help of a control loop, comprising at least one temperature sensor for sensing the temperature and a heating system as an actuator,
**characterized in that**
1.5 the heating system comprises IR radiators which emit short-wave IR radiation with a color temperature of higher than 1,500°C, especially preferably higher than 2,000°C, more preferably higher than 2,400°C, most preferably higher than 2,700°C;

1.6 the apparatus is configured in such a way that the feedback control of the heating or cooling of the glass to be relaxed occurs with a thermal dwell time of less than 10 seconds, especially < 5 seconds.

2. A method according to claim 1, **characterized in that** $T_1 > T_3$ is always the case.

3. A method according to one of the claims 1 to 2, **characterized in that** the IR radiator of the heating system is arranged in an enclosed space comprising reflective or backscattering boundary surfaces.

4. A method according to claim 3, **characterized in that** the reflective or backscattering boundary surfaces comprise one or mixtures of several of the following materials: $Al_2O_3$; $BaF_2$;$BaTiO_3$;$CaF_2$;$CaTiO_3$;$MgO \cdot 3.5\ Al_2O_3$; MgO; $SrF_2$; $SiO_2$; $SrTiO_3$; $TiO_2$; quarzal; spinel; cordierite; cordierite sintered glass ceramics.

5. A method according to one of the claims 3 or 4, **characterized in that** the enclosed space is an IR radiation cavity.

6. A method according to one of the claims 1 to 5, **characterized in that** the heating temperature is less than 90 secs., preferably less than 60 secs., and the temperature $T_2$ is less than 600°C.

7. A method according to one of the claims 1 to 6, **characterized in that** the holding temperature at temperature $T_2$ is less than 60 secs., preferably less than 40 secs.

8. A method according to one of the claims 1 to 7, **characterized in that** the cooling time is less than 120 secs., preferably less than 90 secs. and the temperature $T_3$ is higher than 350°C, preferably higher than 500°C.

9. An apparatus for relaxing glasses, especially the neck element of TV picture tubes, comprising at least

   9.1 a heating unit;
   9.2 a temperature sensor;
   9.3 a closed-loop/open-loop control device for controlling the heating unit depending on the detected temperature and a predetermined temperature program, **characterized in that**
   9.4 the heating unit comprises IR radiators which emit short-wave IR radiation with a color temperature of higher than 1,500°C, especially higher than 2,000°C, more preferably higher than 2,400°C, most preferably higher than 2,700°C, with the apparatus being configured in such a way that the feedback control of the heating or cooling of the glass to be relaxed has a thermal dwell time of less than 10 seconds, especially less than 5 seconds.

10. An apparatus according to claim 9, **characterized in that** the IR radiators of the heating unit comprise in a bordered space in a comprehensive manner reflective or backscattering boundary surfaces.

11. An apparatus according to claim 10, **characterized in that** the reflective or backscattering boundary surfaces comprise one or mixtures of several of the following materials: $Al_2O_3$; $BaF_2$;$BaTiO_3$;$CaF_2$;$CaTiO_3$;$MgO \cdot 3.5\ Al_2O_3$; MgO; $SrF_2$; $SiO_2$; $SrTiO_3$; $TiO_2$; quarzal; spinel; cordierite; cordierite sintered glass ceramics.

12. An apparatus according to one of the claims 10 or 11, **characterized in that** the bordered space is an IR radiation cavity.

13. Use of an apparatus, comprising

   13.1 a heating unit with IR radiators which emit short-wave IR radiation with a color temperature of higher than 1,500°C, especially higher than 2,000°C, more preferably higher than 2,400°C, most preferably higher than 2,700°C;
   13.2 a temperature sensor for sensing the temperature, and
   13.3 a closed-loop/open-loop control device, with the sensed temperature being read in by the closed-loop/open-loop control device and the heating system being triggered according to the read temperature with a thermal dwell time of less than 10 secs., especially less than 5 secs., according to a predetermined temperature program;
   13.4 for relaxing glasses, especially neck elements of TV picture tubes.

14. Use of a method in which

14.1 the glass is heated from a starting temperature $T_1$ to a holding temperature $T_2$;

14.2 the glass is held at the holding temperature $T_2$ for a period $t_2$;

14.3 the glass is cooled to a temperature $T_3$;

14.4 with the temperature curve being controlled by means of a closed-loop control device and the closed-loop control device comprising

14.5 a heating system with IR radiators which emit short-wave IR radiation with a color temperature of higher than 1,500°C, especially preferably higher than 2,000°C, more preferably higher than 2,400°C, most preferably higher than 2,700°C, with a thermal dwell time of less than 10 secs., especially less than 5 secs., for

14.6 relaxing glasses, especially the neck elements of TV picture tubes.

**Revendications**

1. Procédé pour la détente de verres, en particulier de cols de tubes cathodiques pour téléviseurs, comprenant au moins les étapes suivantes :

    1.1 chauffage du verre à détendre d'une température de départ $T_1$ à une température de maintien $T_2$

    1.2 maintien du verre à la température de maintien $T_2$ pendant une durée $t_2$ jusqu'à ce que le verre soit détendu

    1.3 refroidissement du verre à une température $T_3$

    1.4 le maintien à une température $T_2$, le chauffage et le refroidissement sont réalisés à l'aide d'un circuit de régulation comprenant au moins un capteur de température pour détecter la température et une installation de chauffage servant d'organe de régulation,

    **caractérisé en ce que**

    1.5 l'installation de chauffage comprend des radiateurs à infrarouges émettant un rayonnement infrarouge à une température de couleur supérieure à 1500°C, de préférence supérieure à 2000°C et un particulier supérieure à 2400°C, notamment supérieure à 2700°C,

    1.6 le dispositif est construit de telle manière que la régulation du chauffage et du refroidissement du verre à détendre se fait avec un temps mort thermique inférieur à 10 s et de préférence inférieur à 5 s.

2. Procédé selon la revendication 1, **caractérisé en ce que** $T_1$ est toujours supérieure à $T_3$.

3. Procédé selon l'une quelconque des revendications 1 à 2, **caractérisé en ce que** les radiateurs à infrarouges de l'installation de chauffage sont disposés dans un volume délimité comprenant des surfaces de délimitation réfléchissantes et rétrodiffusantes.

4. Procédé selon la revendication 3, **caractérisé en ce que** les surfaces de délimitation réfléchissantes et rétrodiffusantes comprennent l'un des matériaux suivants ou un mélange de plusieurs de ceux-ci : $Al_2O_3$, $BaF_2$, $BaTiO_3$, $CaF_2$, $CaTiO_3$, $MgO\bullet3,5Al_2O_3$, $MgO$, $SrF_2$, $SiO_2$, $SrTiO_3$, $TiO_2$, quarzal, spinelle, cordiérite, vitrocéramique à la cordiérite frittée.

5. Procédé selon l'une quelconque des revendications 3 ou 4, **caractérisé en ce que** le volume délimité est le volume d'une cavité de rayonnement infrarouge.

6. Procédé selon l'une quelconque des revendications 1 à 5, **caractérisé en ce que** le temps de chauffage est inférieur à 90 s, de préférence inférieur à 60 s, et la température $T_2$ est inférieure à 600°C.

7. Procédé selon l'une quelconque des revendications 1 à 6, **caractérisé en ce que** le temps de maintien à la température $T_2$ est inférieur à 60 s, de préférence inférieur à 40 s.

8. Procédé selon l'une quelconque des revendications 1 à 7, **caractérisé en ce que** le temps de refroidissement est inférieur à 120 s, de préférence inférieur à 90 s, et la température $T_3$ est supérieure à 350°C, de préférence supérieure à 500°C.

9. Dispositif pour la détente de verres, en particulier de cols de tubes cathodiques pour téléviseurs, comprenant au moins :

    9.1 une installation de chauffage

    9.2 une sonde de température

9.3 un dispositif de régulation et de commande pour la commande de l'installation de chauffage en fonction de la température détectée et d'un programme de température prédéterminé pour la détente de verres, **caractérisé en ce que**

9.4 l'installation de chauffage comprend des radiateurs à infrarouges émettant un rayonnement infrarouge à une température de couleur supérieure à 1500°C, de préférence supérieure à 2000°C et un particulier supérieure à 2400°C, notamment supérieure à 2700°C, le dispositif étant construit de telle manière que la régulation du chauffage et du refroidissement du verre à détendre se fait avec un temps mort thermique inférieur à 10 s et de préférence inférieur à 5 s.

**10.** Dispositif selon la revendication 9, **caractérisé en ce que** les radiateurs à infrarouges de l'installation de chauffage sont disposés dans un volume délimité comprenant des surfaces de délimitation réfléchissantes et rétrodiffusantes.

**11.** Dispositif selon la revendication 10, **caractérisé en ce que** les surfaces de délimitation réfléchissantes et rétrodiffusantes comprennent l'un des matériaux suivants ou un mélange de plusieurs de ceux-ci : $Al_2O_3$, $BaF_2$, $BaTiO_3$, $CaF_2$, $CaTiO_3$, $MgO•3,5Al_2O_3$, $MgO$, $SrF_2$, $SiO_2$, $SrTiO_3$, $TiO_2$, quarzal, spinelle, cordiérite, vitrocéramique à la cordiérite frittée.

**12.** Dispositif selon l'une quelconque des revendications 10 ou 11, **caractérisé en ce que** le volume délimité est le volume d'une cavité de rayonnement infrarouge.

**13.** Utilisation d'un dispositif comprenant

13.1 une installation de chauffage comprenant des radiateurs à infrarouges émettant un rayonnement infrarouge à une température de couleur supérieure à 1500°C, de préférence supérieure à 2000°C et un particulier supérieure à 2400°C, notamment supérieure à 2700°C

13.2 une sonde de température pour détecter la température

13.3 un dispositif de régulation, la température détectée étant lue par le dispositif de régulation et l'installation de chauffage étant commandée en fonction de la température lue selon un programme de température prédéterminé, avec un temps mort thermique inférieur à 10 s et en particulier inférieur à 5 s,

13.4 pour la détente de verres, en particulier de cols de tubes cathodiques pour téléviseurs.

**14.** Utilisation d'un procédé dans lequel

14.1 le verre est chauffé d'une température de départ $T_1$ à une température de maintien $T_2$,

14.2 le verre est maintenu à la température de maintien $T_2$ pendant une durée $t_2$,

14.3 le verre et refroidi à une température $T_3$

14.4 l'évolution de la température étant régulée au moyen d'un dispositif de régulation et le dispositif de régulation commandant

14.5 une installation de chauffage qui comprend des radiateurs à infrarouges émettant un rayonnement infrarouge à une température de couleur supérieure à 1500°C, de préférence supérieure à 2000°C et un particulier supérieure à 2400°C, notamment supérieure à 2700°C, avec un temps mort thermique inférieur à 10 s et de préférence inférieur à 5 s, pour

14.6 la détente de verres, en particulier de cols de tubes cathodiques pour téléviseurs.

Fig. 1

Fig. 2

spektraler Remissionsgrad

Wellenlänge (nm)

EP 1 409 421 B1

FIGUR 3.

FIGUR 4;

FIGUR 5